# EUROPEAN PATENT APPLICATION

(11) **EP 2 357 387 A2**
(43) Date of publication of application: **17.08.2011**
(21) Application number: 11154257.7
(22) Date of filing: 11.02.2011
(51) Int. Cl.: F16K 11/076

(54) **Actuator, valve and method**

(30) Priority: 15.02.2010 GB 1002503
(71) Applicant: National Oilwell Varco UK Limited, Audenshaw Manchester Lancashire M43 5JA (GB)
(72) Inventor: Wood, Carl, Aberdeen, Aberdeenshire AB32 6TQ (GB); Senkbeil, George, Aberdeen, Aberdeenshire AB32 6TQ (GB); Joensen, Runi, Aberdeen, Aberdeenshire AB32 6TQ (GB)
(74) Representative: Watson, Craig Simon

(57) **Abstract**

An actuator or valve (10) comprising: an inner member; an outer member (26) around the normally rotatable inner member (20); the inner member (20) comprising normally two spaced apart outwardly extending projections (28) abutting with the outer member (26); the outer member (26) comprising normally two inwardly extending projections (30) abutting with the inner member (20), said projections (30) defining a chamber (32) therebetween; and the actuator further comprising a fluid port (33) in communication with said chamber (32). The actuator/valve is normally made by straight profile cutting. Embodiments provide a compact rotary actuator which may be remotely operated.

## Description

This invention relates to an actuator, valve and method, particularly but not exclusively to a rotational valve for use in selectively directing hydraulic fluid.

Rotational actuators and valves are known and one common application is to direct high pressure hydraulic fluid from a hydraulic fluid input to one of a number of different outputs, each corresponding to a different application. To do this, a lever on the valve is manually turned in order to rotate a distributor which then directs the hydraulic fluid to the desired hydraulic output.

Whilst reasonably satisfactory it would be preferred to be able to operate the actuator remotely.

According to a first aspect of the present invention, there is provided an actuator comprising:
an inner member;
an outer member around the inner member;
the inner and outer members being rotatable with respect to each other;
the inner member comprising an outwardly extending projection abutting with the outer member;
the outer member comprising an inwardly extending projection abutting with the inner member, said projections defining a chamber therebetween;
   and
the actuator further comprising a fluid port in communication with said chamber.

Thus embodiments of the present invention provide a hydraulically activated actuator which may be activated remotely. In particular embodiments of the invention provide for this in a space efficient and cost effective manner.

The inner member (excluding the projection) is preferably substantially circular in shape, more preferably circular-ring shaped.

The outer member is preferably circular-ring shaped.

Normally only one of the inner and outer members rotate and the other is stationary relative to an outer body. Preferably the inner member is rotatable whilst preferably the outer member is stationary relative to the outer body. Whichever of the inner and outer members which rotates is referred to as the "rotating member".

The actuator normally has a mechanism to couple the rotating member to an external device. For example the rotating member may be fixed to a drive shaft by a locating key and the drive shaft may extend out of the outer body and an end of the drive shaft fixed in use to an external device.

The projections typically extend for the entire axial height of the inner and outer members, the axis defined by the rotational axis of the inner or outer member.

Normally two chambers are defined around the circumference of the inner member, and are defined by the two projections. For example in one position, the projections may be spaced apart by 90 degrees thus defining a first chamber between the projections extending for around 90 degrees, and a second chamber extending for around 270 degrees. In practice they will be slightly less depending on the radial length of the projections. Preferably the each projection extends for 30 - 60 degrees, preferably 40 - 50 degrees.

Indeed preferably the inner member has two (or more) outwardly extending projections, typically opposite each other and preferably the outer member has two (or more) inwardly extending projections, typically opposite each other. Thus for such embodiments, four (or more) chambers are defined between the projections.

Preferably a fluid port is in communication with each chamber. Typically the or each fluid port is a control fluid port. The fluid port may be an inlet or an outlet but can preferably be operable as both. In use, hydraulic fluid can be injected or removed from said chambers through said ports. In a normal operation this drives rotation of the inner and outer members with respect to each other. The rotational drive generated, referred to hereinafter as torque, is proportional to the area of the chambers, particularly the chambers' width, that is the distance between the inner and outer members. By alternating the injection between the different chambers, the rotating member can be made to reciprocate.

However in an alternative mode of operation, the actuator may be operated to work in reverse, receiving an outside force to rotate the inner and outer members with respect to each other in order to produce a surge of fluid from the chambers.

The use of two projections in each of the inner and outer members is preferred since this provides a more balanced rotational force in use. Further projections may also be added. Often the rotating member is limited to adopting the number of positions corresponding with the number of chambers and so for applications requiring the rotor to adopt more positions, further projections can be utilised.

Further positions can also be achieved by nesting a further member inside or outside the inner or outer member, as described in more detail below.

Preferably the inwardly and outwardly extending projections are arranged such that they alternate between inwardly and outwardly extending projections. That is, preferably there are not two inwardly, or two outwardly, extending projections in sequence.

For the sake of clarity, when referring to the inwardly extending projection of the outer member, or the outwardly extending projection of the inner member, the "other member" as referred to hereinafter is the member to which the projection abuts, that is the inner member and the outer member respectively.

The portion of the projection abutting the other member is referred to as a bearing face (of the projection). Typically the bearing face of the projection has a complementary shape, typically arcuate, with that of the other member.

The inwardly extending projection of the outer member preferably has a shoulder extending outwardly therefrom, preferably two shoulders extending outwardly from each end. The shoulders are preferably a continuum of the bearing face of the projections. Thus each shoulder defines a groove between the shoulder, projection and the outer member.

Typically the inner and outer members are concentric.

Rotation as used herein normally means part-rotation, that is less than 360 degrees since full rotation is limited, at least, by the projections on the inner and outer members abutting with each other.

Preferably a retention mechanism is provided in order to retain the rotor in a stationary position when rotation is not intended. The retention mechanism may be a spring loaded ball and a detent, each provided on one of the rotating member and a stationary part of the actuator. For example the spring loaded ball may be provided on a lower body and the detent on the rotor. On activation of the rotor, sufficient torque is typically generated to overcome the force exerted by the retention mechanism.

Optionally a manual lever is included as a back-up in order to turn the rotor if required.

For certain embodiments, a further member is added having a projection extending towards the inner or outer member and thus defining a further chamber between the further member and either the inner or outer member which have an extra projection extending towards the further member. It will be appreciated that the direction of the projection of the further member will depend on whether the further member is inside of the so-called inner member or outside of the so-called outer member. The closest member to the further member, for example the so-called inner member when the further member is placed thereinside, is referred to as its "adjacent member". Relative rotation between the further member and its adjacent member is actioned in the same manner as described above with respect to the inner and outer members and their preferred and optional features should be understood to be preferred and optional features for the further member and its adjacent member. Indeed any number of further members may be added each rotating relative to its adjacent member. One advantage of such embodiments is increasing the overall degree of rotation available to the actuator, since simpler embodiments having only the inner and outer member and with the preferred two projections on each can normally rotate by less than 180 degrees. Moreover more discrete positions for an output to control an external device, such as a valve, can be achieved.

In use, the torque generated by the rotating member is normally directly governed by the pressure difference generated across the projections - and therefore normally directly governed by the seal achieved between the projections and the other member which in turn depends on the clearance between the projections and the other members. Normally clearance is eliminated by the use of elastomer seals, but the inventors of the present invention prefer to tightly control the sizing of the projections and the other member, whilst any leakage flow and pressure loss can be managed.

Some benefits of embodiments of the invention is that they provide rotary actuation, in a small space envelope, without any requirement for elastomer sealing on the inner and outer members. Thus preferably there is no further seal provided between the outwardly extending projection and the outer member. And preferably there is no further seal provided between the inwardly extending projection and the inner member.

This is in marked contrast to the accepted practice in this field, which is to provide seals, such as o-ring seals, where two components abut and move with respect to each other. An advantage of embodiments of the invention is that the longevity of the actuator may be increased since such seals are not included, and these seals tend to wear before other components of the actuator.

The present inventors have noted that since the actuator is pulsing in nature, the pressure difference is only required for the duration of the rotation, so only a temporary dynamic seal is required. Therefore by increasing the tolerance control on the projections as well as the thickness and flatness of the rotor and stator, this aids the actuator in providing sufficiently high torques and swift motion without the use of elastomer seals on the rotor.

The abutment between each projection and the other member is normally an extremely tight tolerance. Preferably there is less than 0.254cm, more preferably less than 0.0254cm, especially less than 0.00254cm, and may be up to 0.000254cm or less between the projection and the other member.

The clearance can also vary with the size of the rotor diameter (calculated including the projections). Preferably the clearance between the projection and the other member is less than 0.25% of the rotor diameter, more preferably less than 0.025% and may be less than 0.0025%.

In use the actuator can be connected to another device in order to actuate said device. The actuator can be provided on collars, mechanical locks, valves or other devices.

The actuator can also be used to translate rotary motion into linear motion via a camshaft.

The invention also provides a valve comprising the actuator and at least one inlet and at least one outlet. Normally there is one inlet.

Where the actuator is provided with a valve, typically at least one of the inner and outer members comprises a distributor,
the distributor being in fluid communication with one of the inlet and the outlet, and, rotatable between a first position, where it is also in fluid communication with the other of the inlet and the outlet, and a second position where fluid communication with said other of the inlet and outlet, is reduced.

Thus according to a second aspect of the invention there is provided a valve comprising:
at least one inlet;
at least one outlet;
an inner member;
an outer member around the inner member;
wherein at least one of the inner and outer members comprises a distributor, the distributor being in fluid communication with one of the inlet and the outlet, and, rotatable between a first position, where it is also in fluid communication with the other of the inlet and the outlet, and a second position where fluid communication with said other of the inlet and outlet, is reduced,
the inner member comprising an outwardly extending projection abutting with the outer member;
the outer member comprising an inwardly extending projection abutting with the inner member, said projections defining a chamber therebetween; and, the valve further comprising a fluid port in communication with said chamber.

Normally there is one inlet.

Normally the distributor is in fluid communication with the inlet, and, rotatable between a first position, where it is in communication with the outlet, and a second position where fluid communication with said outlet is reduced. However for less preferred alternative embodiments, the distributor is in fluid communication with the outlet, and, rotatable between a first position, where it is in communication with the inlet, and a second position where fluid communication with said inlet is reduced.

Preferably at least one of the inner and outer members comprises a distributor and preferably the other of the inner and outer members is a stator. The stator typically remains stationary in use. Preferably the outer member is the stator.

Preferably the inner member comprises the distributor. In any case, preferably the member comprising the distributor is formed in two parts, one part comprising the distributor and the other part comprising the projections. The parts are typically held together in use such that relative movement between the parts is prevented. An advantage of such an embodiment is that the preferred precise size of the projections can be manufactured in one part whilst the internal configuration of the distributor can be manufactured in another part; which the present inventors consider to be more efficient than forming the distributor and the part comprising the projections as a single manufactured piece.

The second position where fluid communication with said at least one inlet/outlet is reduced may be any position which regulates the flow of fluid from or to the inlet/outlet in use and thus the valve may work as a proportional valve. However more preferred embodiments the position where the fluid communication is reduced, is a position where the distributor is not in fluid communication with said at least one inlet/outlet and therefore is essentially a valve-closed position. Thus the valve of the present invention may function as an on/off valve. Still more preferably however, there is more than one outlet and the second position also opens fluid communications with a second outlet whilst simultaneously reducing fluid communication with the first outlet, preferably stopping fluid communication with the first outlet. Whilst there is normally one input, a number of separate outlets may be provided and preferably the distributor is added to rotate so that it can take up more than two positions, each position selectively in communication with any one of the outlets.

Preferably the inner member and outer member were cut from the same piece of material. In this way, any variations in thickness, flatness and/or surface finish are minimised.

Thus according to a third aspect of the invention there is provided a method of manufacturing an actuator or a valve, the method comprising:
providing a piece of material;
cutting a first member from said piece of material; and
cutting a second member from the same piece of material.

Preferably the material is cut by profile cutting. Preferably the cutting is in a single straight line or plane, that is directly from an arbitrary position 'a' to an arbitrary position 'b' into, and typically through, the piece material, and preferably therefore does not deviate from said straight line or plane.

A plurality of separate cuts may be performed.

Typically the first member is cut from the material at an area which is surrounded by the area which is cut to form the second member.

Preferably no grinding is required. Preferably no milling is required. Preferably no facing is required. Preferably no other processes are conducted which may introduce set-up inaccuracies and misalignment and require extended machining time.

In order to achieve preferred tolerances, the piece of material used to form the first member and second member is preferably cut using the technique known as Electrical Discharge Machining (EDM). This known, but highly specialised, technique can provide a suitable tolerance between the first and second member. An EDM machine may be obtained from Agie Charmilles Ltd, Coventry United Kingdom.

Preferably the piece of material is cut from standard ground tool-steel stock. This plate material is readily available (for example, from RS Components, Corby, UK) which is pre-manufactured to have a very tight tolerance on thickness, flatness and roughness.

Preferably the first and second members which have been cut from the same piece of material are marked as a pair and used in the same actuator or the same valve.

Preferably the actuator according to the third aspect of the present invention comprises a first member and a second member moveable, preferably rotatable, with respect to each other.

Preferably the actuator according to the third aspect of the present invention comprises a first member comprising projections abutting with a second member

Preferably the second member comprises projections abutting with the first member.

Preferably said projections define a chamber therebetween and preferably the actuator comprises a fluid port in communication with said chamber.

Preferably the first member is an inner member. Preferably the second member is an outer member.

Preferably therefore the actuator or valve is the actuator or valve in accordance with an earlier aspect of the invention and preferred and other optional features according to the first and second aspects of the invention are to be regarded as preferred and optional features for embodiments in accordance with the third aspect of the invention.

For embodiments comprising further members rotatable with respect to adjacent members, all further members are preferably also cut from the same piece of material as the so-called inner and so-called outer member.

A further advantage of such a technique is that any variation in thickness, flatness and/or surface finish are minimised.

Preferably the method is fully automated so the inner and outer members can be readily batch produced out of large stock plates without need to re-setup the machine, minimising labour costs.

Normally embodiments are operated using a pressure within the chambers in the range of 100 - 10,000psi, preferably 200 - 5,000psi, more preferably 300 psi to 3,000psi.

Embodiments of the present invention will now be described, by way of example only, and with reference to the accompanying figures in which:
Fig. 1 is an exploded view of a valve comprising an actuator in accordance with the present invention;
Fig. 2a is a second exploded view of the Fig. 1 valve, without an upper body;
Fig. 2b is a part-assembled view of the Fig. 1 valve, without the upper body;
Fig. 2c is a perspective view of the Fig. 1 valve in an assembled state;
Fig 2d is a plan view of the Fig. 1 valve in a first rotational position with the upper body removed for illustration purposes;
Fig 2e is a plan view of the Fig. 2d valve in a second rotational position;
Fig 2f is a plan view of the Fig. 2e valve in a third rotational position;
Fig. 3 is a plan view of a rotor element of the Fig. 1 valve;
Fig. 4a is a plan view of a stator element of the Fig. 1 valve;
Fig. 4b is an enlarged view of the area B in Fig. 4a;
Fig. 5a is an exploded view of an alternative embodiment of an actuator in accordance with the present invention;
Fig. 5b is a perspective view of the Fig. 5a actuator in an assembled state;
Fig 5c is a plan view of the Fig. 5a actuator in a first rotational position with the upper body removed for illustration purposes;
Fig 5d is a plan view of the Fig. 5c actuator in a second rotational position; and,
Fig 5e is a plan view of the Fig. 5c actuator in a third rotational position.

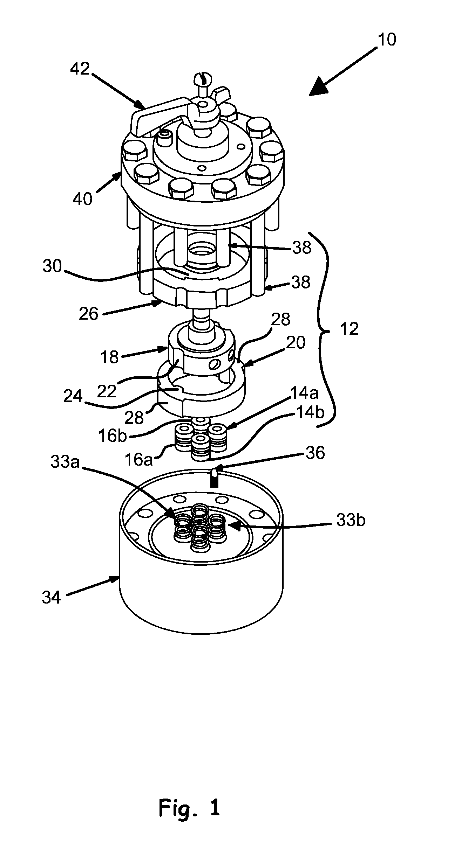

Fig. 1 shows an exploded view of a valve 10 comprising an actuator 12 in accordance with the present invention. The valve 10 has two input or supply lines 14a, 14b corresponding to activation of external devices A and B (not shown), a pressurised line 13 from a hydraulic pump (not shown) and a return line 16. A distributor 18 receives the lines 13, 14a, 14b, 16 in a bottom face thereof and has internal piping (not shown) which allows these lines to fluidly communicate depending on the rotational position of the distributor 18 in order to selectively direct fluids to activate one of the external devices A or B.

The distributor 18 is provided in a substantially ring-shaped rotor 20 and indents 22 on a circumferential edge of the distributor 18 locate in notches 24 provided on the inner face of the rotor 20 to prevent rotation between the two components.

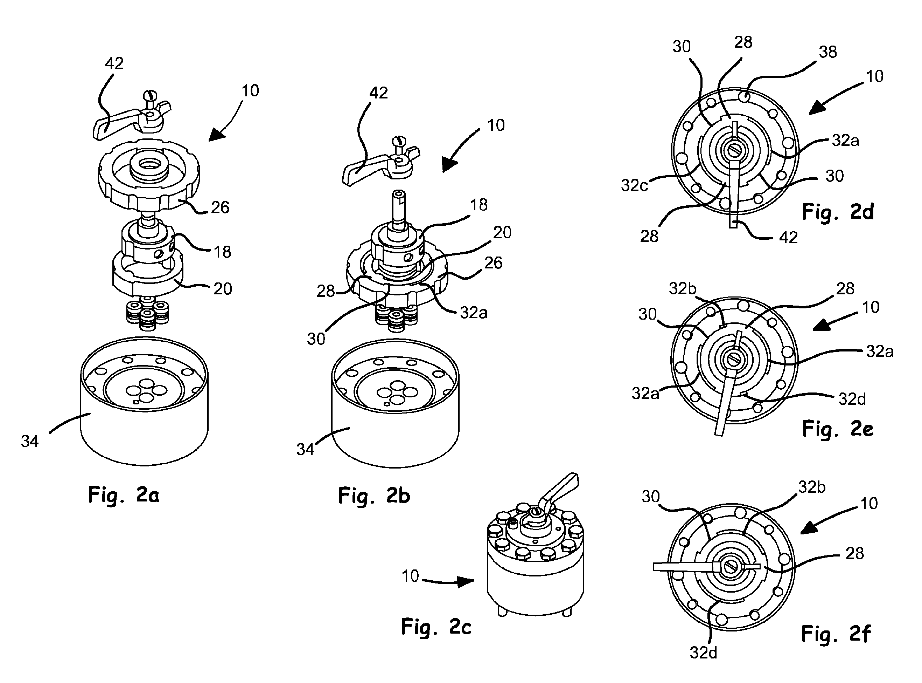

The rotor 20 is located inside a generally ring-shaped stator 26. The rotor 20 has two opposite projections 28 extending outwardly from a circumferential edge thereof which abuts and forms a seal with an inner face of the stator 26. The stator 26 has two inwardly extending projections 30 which form a seal with an outer face of the rotor 20. Notably , no further seals, such as o-ring seals are required. Thus between the respective projections of the rotor 20 and stator 26 are defined chambers 32a - 32d (shown in Figs. 2a - 2d) into which hydraulic fluid may be added from control fluids ports 33a - 33d to drive rotation of the rotor 20, as described in more detail below.

The valve 10 is secured to a lower body 34 with springs urging the fluid lines 13, 14a, 14b, 16 towards the distributor and a spring loaded ball 36 for location in a detent (not shown) of the distributor 18 which functions to retain the distributor in a rest position when torque is not being activated. An upper body 40 is provided over the actuation mechanism 12 and the valve fixed together using a plurality of hexagonal bolts 38. A lever 42 is provided as a back-up to allow the rotor 20 to be turned manually if required.

Fig. 2a is a further exploded view of the valve 10 and Fig. 2b shows a partially assembled view. In Fig. 2c the assembled valve 10 is shown.

The chambers 32a - 32d can be seen in Fig. 2d, defined by the outwardly extending projections 28 of the rotor 20 and the inwardly extending projections 30 of the stator 26. In the position shown in Fig. 2d the distributor 18 aligns the input 14a with the supply line 13 and the input 14b with the return line 16; in order to activate the external device A whilst external device B is inactive. The chambers 32a - 32d are not under pressure when the rotor 20 is stationary.

To rotate the rotor 20 and enclosed distributor 18, the control ports 32a, 32c are pressurised and the ports 32b, 32d are vented. This produces torque and caused the rotor 20 and distributor 18 to rotate in a clockwise direction, as viewed in Fig. 2e. The stator 26 and the inwardly extending projections 30 thereon remain stationary during the rotation of the rotor 20. The rotor 20 continues to rotate until the outwardly extending projections 28 abut with the inwardly extending projections 30, as shown in Fig. 2e. The chambers 32a, 32c can then be depressurised. The distributor 18, which turns with the rotor 20, thus aligns its internal porting to allow the input 14b to communicate with the supply line 13, and the input 14a to communicate with the return line 16 thus deactivating external device A and activating external device B.

Thus embodiments of the present invention can be used to hydraulically activate a rotational valve to switch from supplying fluids for one purpose, corresponding to input 14a to another purpose corresponding to input 14b.

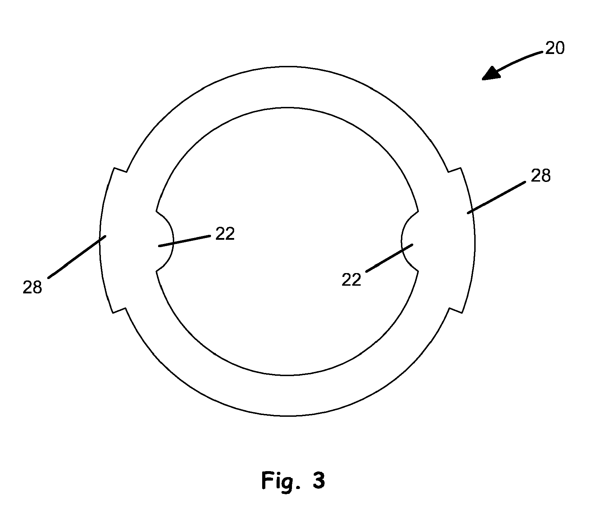

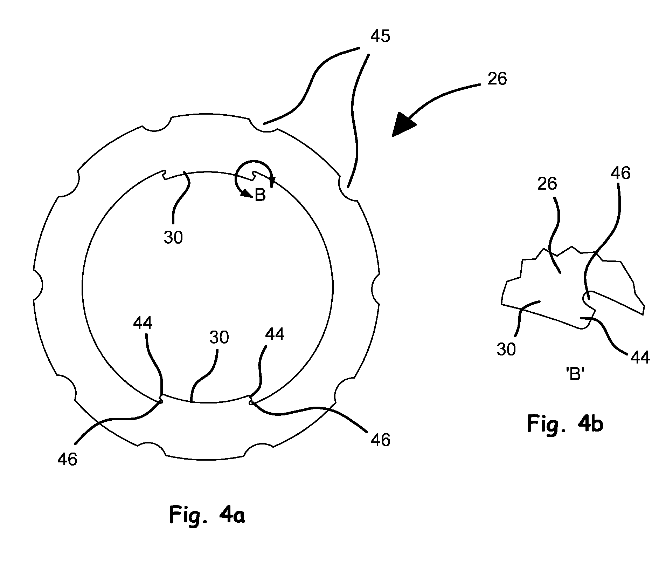

The rotor 20 is shown in more detail in Fig. 3 showing notches 24, for location with the distributor 18 and projections 28. Fig. 4a shows the stator 26 with the inwardly extending projections 30. Notches 45 are provided in the circumferential edge for location with the hexagonal bolts used to assemble the overall valve 10. As shown in an enlarged view of Fig. 4b, the projections 30 have shoulders 44 extending from the outer edge thereof thus defining a groove 46. The groove 46 and shoulders 44 prevent the control ports 32a - 32d from being blocked when the inwardly and outwardly extending projections abut each other during use.

To manufacture the stator 26 and rotor 20 a particular manufacturing process is preferred in accordance with a further aspect of the present invention.

The stator 26 and rotor 20 are formed from the same block or piece of material. The material is a precision ground flat stock (of variable thickness), fully annealed and suitable for hardening with excellent dimensional stability and wear resistance. Thickness and flatness tolerance typically +0.001"-0.001".

The rotor 20 is profile-cut from a block (not shown) of the ground tool-steel stock and a stator 26 is profile-cut from the same block surrounding the void left by the rotor which has been cut thereform. A portion of the outer face of the stator 26 (which represented the gap between the rotor piece and the stator piece in the original block of material) is then profile-cut away in order to leave the stator 26.

This ensures that variation in thickness, flatness and surface finish are minimised. No grinding, milling, facing or other processes are required.

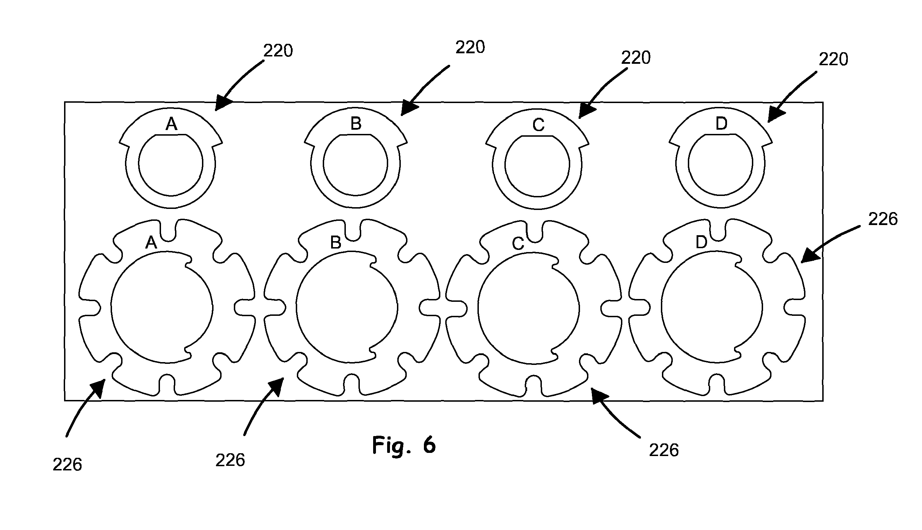

The cutting is performed using the technique of Electrical Discharge Machining which can produce a very accurate profile-cut in the piece of material. Fig. 6 shows a series of rotors 220 and stators 226, each pair being cut from the same piece of material.

In alternative embodiments, the stator 26 is first cut from the material and then the rotor 20.

In use embodiments of the invention benefit in that the shoulders interfacing with the stator or rotor 20 are very close together. This obviates the need for o-ring seals and thus lengthens the durability of the actuator.

Whilst some very small clearance is required between the shoulders and interfacing rotor 20 or stator to allow it to move, any leakage through this interface can be managed, noting the actuator will only be under dynamic pressure during rotation.

Another one of the advantages with embodiments of the invention, such as that show in the preceding figures, is that the projections are evenly spaced around the circumference of the rotor 20/stator 26. In alternative embodiments, three or more projections may be provided on each of the stator and rotor. This even spacing allows the rotor and stator to be "floating" in relation to other parts and the forces driving the rotation to be balanced at the centre point. The rotor drives an actuated part, such as a distributor, but the clearance gaps between these two parts can be one, two or more orders of magnitude greater than between the rotor and stator. This ensures that the rotor/stator pair is a "floating" entity inside a greater assembly and that aspects such as shaft concentricity, bearing location and others are independent of this design. This greatly simplifies the actuator design.

Moreover this reduces wear of the components and also reduces the likelihood that a rotor will stick during rotation. Also replaceable elastomer seals are not required.

Due to the floating nature of the rotor and stator pair the component wear is reduced significantly resulting is a greatly prolonged service life.

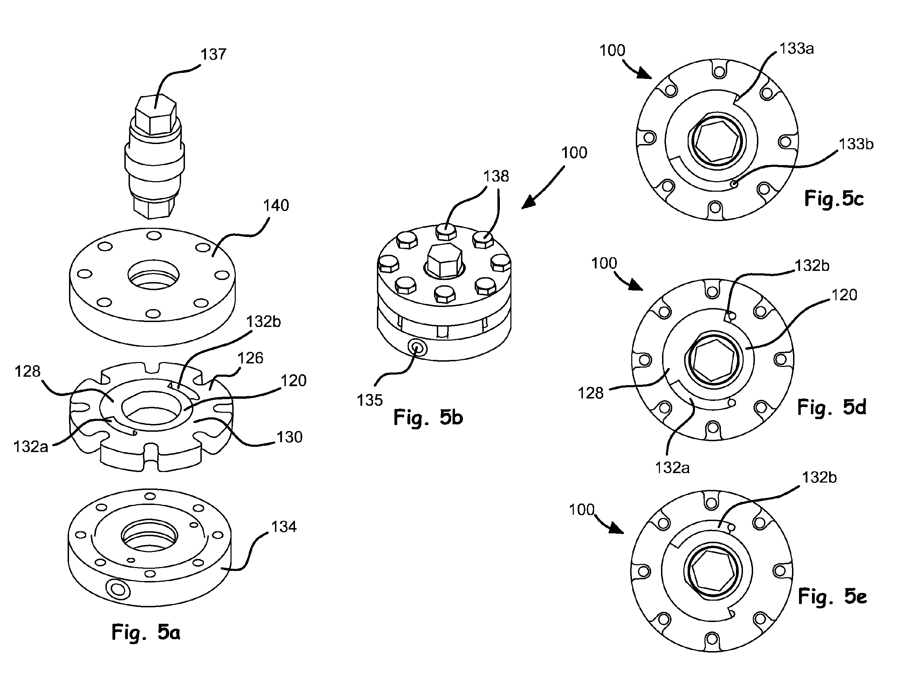

Whilst it is preferred to have a plurality of projections from each of the rotor and stator, it is not necessary and Figs. 5a - 5e show an embodiment of an actuator where only a single projection from each of a stator and rotor is used. Fig. 5 also relates to an actuator which may be coupled to other items , not just valves. It will be appreciated that the embodiment illustrated in the preceding figures could equally be adapted to function as an actuator for items other than valves.

An exploded view of actuator 100 is show in Fig. 5a comprising a stator 126 having an inwardly extending projection 130 and a rotor 120 having an outwardly extending projection 128, thus defining chambers 132a, 132b between the projections 128, 130. Other components include a shaft 137, side bolts 138, a control fluid input 135, an upper body 140 and a lower body 134.

The assembled actuator is shown in Fig. 5b and a plan view in Fig. 5c. The actuator 5 is operated in a similar manner to that described above for the earlier embodiment - hydraulic fluid is added through a control port 133 and an opposite control port 133b is vented. This causes the rotor 120 to rotate in an anti-clockwise direction as viewed and rotate the shaft 137. Fig. 5d shows a 10 degree rotation and Fig. 5c shows a 90 degree rotation. The shaft 137 can be attached to an external device and the rotation used to activate a switch, block, collar or for other purposes.

Thus embodiments of the present invention provide a low cost rotary actuator in a confined space which can produce a significant amount of torque strength.

Improvements and modifications may be made without departing from the scope of the invention.

## Claims

1. An actuator comprising:
an inner member;
an outer member around the inner member;
the inner and outer members being rotatable with respect to each other;
the inner member comprising an outwardly extending projection abutting with the outer member;
the outer member comprising an inwardly extending projection abutting with the inner member, said projections defining a chamber therebetween;
and
the actuator further comprising a fluid port in communication with said chamber.

2. An actuator as claimed claim 1, wherein the inner member is rotatable whilst the outer member is stationary relative to the outer body.

3. An actuator as claimed in either preceding claim, wherein each projection extends for 30 to 60 degrees, preferably 40 to 50 degrees.

4. An actuator as claimed in any preceding claim, wherein the inner member has two or more outwardly extending projections and the outer member has two or more inwardly extending projections.

5. An actuator as claimed in any preceding claim, wherein a further member is added having a projection extending towards the inner or outer member and thus defining a further chamber between the further member and either the inner or outer member which has an extra projection extending towards the further member.

6. An actuator as claimed in any preceding claim, wherein the actuator is used to translate rotary motion into linear motion via a camshaft.

7. An actuator as claimed in any preceding claim, wherein, in use, hydraulic fluid is injected into the chamber to drive rotation of the inner and outer members with respect to each other.

8. A valve comprising the actuator as claimed in any preceding claim, the valve comprising at least one inlet and at least one outlet.

9. A valve as claimed in claim 8, wherein at least one of the inner and outer members comprises a distributor,
the distributor being in fluid communication with one of the inlet and the outlet, and, rotatable between a first position, where it is also in fluid communication with the other of the inlet and the outlet, and a second position where fluid communication with said other of the inlet and outlet, is reduced.

10. A valve as claimed in claim 9, wherein the position where the fluid communication is reduced, is a position where the distributor is not in fluid communication with said at least one inlet/outlet and therefore is essentially a valve-closed position.

11. A valve as claimed in claim 9 or 10, wherein the distributor is in fluid communication with the inlet, and, rotatable between a first position, where it is in communication with the outlet, and a second position where fluid communication with said outlet is reduced.

12. A valve as claimed in any one of claims 8 to 11, wherein the inner member comprises a distributor and the outer member is a stator.

13. A method of manufacturing an actuator as claimed in claims 1 to 7 or a valve as claimed in claims 8 to 12, the method comprising:
providing a piece of material;
cutting a first member from said piece of material; and
cutting a second member from the same piece of material.
the material is cut by profile cutting;
thus providing said actuator or said valve.

14. A method as claimed in claim 13, wherein the cutting is in a single straight line or plane, directly from an arbitrary position 'a' to an arbitrary position 'b' into, and through, the piece material.

15. A method as claimed in either one of claims 13 or 14, wherein the first member and second member are cut using the technique known as Electrical Discharge Machining (EDM).
